# EUROPEAN PATENT SPECIFICATION

(11) **EP 1 667 539 B1**
(45) Date of publication and mention of the grant of the patent: **16.07.2008**
(21) Application number: 04785306.4
(22) Date of filing: 30.09.2004
(51) Int. Cl.: A23L 2/84, A23L 2/04, A23L 2/72, A23L 1/214

(54) **PROCESS FOR ENZYMATIC TREATMENT AND FILTRATION OF A PLANT AND PRODUCTS OBTAINABLE THEREBY**
VERFAHREN FÜR DIE ENZYMATISCHE BEHANDLUNG UND FILTRATION EINER PFLANZE SOWIE DADURCH ERHÄLTLICHE PRODUKTE
PROCEDE DE TRAITEMENT ENZYMATIQUE ET DE FILTRATION D'UNE PLANTE ET PRODUITS POUVANT ETRE AINSI OBTENUS

(30) Priority: 01.10.2003 US 508172 P
(43) Date of publication of application: 14.06.2006
(73) Proprietor: CAMPBELL SOUP COMPANY, Camden, NJ 08103-1799 (US)
(72) Inventor: FIRARY, Mark, Frederick, Philadelphia, PA 19147 (US); CROWE, Tammy, East Windsor, NJ 08520 (US); YEOM, Hye, Won, Mount Laurel, NJ 08054 (US); PEACOCK, Michele, Marlton, NJ 08053 (US); KIMBLE, Lewis, Davis, CA 95616 (US); ALVARADO, Armando, Woodland, CA 95695 (US)
(74) Representative: Gambell, Derek
(86) International application number: PCT/US2004/032135
(87) International publication number: WO 2005/032282

(56) References cited:
- EP-A- 1 005 795
- WO-A-88/06005
- WO-A-98/24331
- DATABASE WPI Section Ch, Week 200271 Derwent Publications Ltd., London, GB; Class D13, AN 2002-658425 XP002317893 & CN 1 187 957 A (YAN G) 22 July 1998 (1998-07-22)
- PATENT ABSTRACTS OF JAPAN vol. 1997, no. 08, 29 August 1997 (1997-08-29) & JP 09 107934 A (MIYAZAKI PREF GOV J A SHOKUHIN KAIHATSU KENKYUSHO), 28 April 1997 (1997-04-28)

## Description

### Technical Field

This invention generally relates to a process for enzymatically treating a plant, and, in particular, to a process for filtering an enzyme-treated plant feed material to prepare a nutrient-containing retentate and a juice-containing permeate.

### Background Art

Filtration methods have been used in the food processing industry for the production of juice. Typically, a fruit or vegetable is prepared through-crushing, dicing, grinding, milling, extracting, enzyme treating and/or other steps into a raw juice, a puree or other processable form that is then filtered to separate a juice-containing permeate from a retentate. The resulting permeate may be used as the juice, or may be-concentrated and then frozen and/or stored for later use. The resulting retentate also may be usable for food stuffs.

For example, U. S. Patent No. 4,551,341 to Blanie et al. describes a process for obtaining a clear plant juice that includes at least two ultrafiltration stages. The plant is first pressed to separate the pulp from a primary (raw) juice. The temperature of the raw juice is adjusted depending on its pH according to a formula that is described in the specification and claims, and typically falls in a range of 50 to 65°C (about 122 to 149°F) for pH between about 5 and 3. The temperature-adjusted raw juice is subjected to a first ultrafiltration stage to yield a primary clear juice and a primary pectic concentrate. The primary pectic concentrate (which may be diluted with water) is subjected to a second ultrafiltration stage to yield a second clear juice (which is added to the primary clear juice obtained in the first ultrafiltration stage) and a second pectic concentrate. According to Blanie et al., the juices so obtained are very clear, without a tendency to darken significantly over time, and sterile, which avoids the need for pasteurizations.

In another example, U. S. Patent No. 4,716,044 to Thomas et al. describes a single pass ultrafiltration process for simultaneously extracting, clarifying and sterilizing juice from fruit. As described by Thomas et al., the fruit is processed into a pumpable puree, and the puree is pumped in a single pass at a specified inlet pressure through a porous tubular housing of a specified length and diameter and having a food grade ultrafiltration membrane secured along the inside surfaces thereof. The ultrafiltration membrane has an initial permeability to water of about 1 to about 15, as defined in the specification and claims.
International patent publication WO 9824331 (BARTH FRUIT AG et al.) describes a process in which at least one enzyme is added to a juice consisting of fruit and/or vegetable juice in order to break down solids particles present in said juice. The resultant mixture is clarified by at least one filtration process so that a clear, solids-free juice fraction is produced which contains dissolved juice components, for example sugar, acids, vitamins and aromatic substances. The juice fraction is filtered by means of a first membrane filter, that is a reverse osmosis filter. The resultant first retentate is filtered by means of a second membrane filter, that is a nano filter, such that a second retentate is produced.
The juice fraction is highly concentrated in a gentle manner by the gradual filtration processes using the two membrane filters at low temperatures. Formed from the second retentate is a highly concentrated high-quality juice concentrate which contains all the substances dissolved in the juice and in the juice fraction in a practically unchanged state and in at least approximately the same proportions as in the clear juice fraction.
Chinese patent publication CN 1187957A (YAN GUANGZHAO) describes a production method of sweet potato beverage which includes the following steps: cleaning fresh sweet potato, peeling and mashing to obtain a sweet potato pulp, pressing the pulp to obtain sweet potato raw juice and filtering through a screen until there is no obvious sediment. To 100 parts carbonic acid solution, adding 2.5-3 parts sweet potato juice. 20-25 parts citric acid, 3-5 parts sodium benzoate, 8-10 parts stevia, 3-5 parts multi-vitamins or almond, 15-20 parts various amino acids, 25-30 parts of honey and slight amounts of food coloring and flavoring, evenly stirring and canning.

### Disclosure of Invention

The present invention provides improved processes for enzymatically treating and filtering a plant, such as a fruit, vegetable, and other plant parts (e.g., root, tuber, *etc*.), and products obtainable thereby.

In one embodiment, a plant is washed and treated with a liquefication enzyme to form an enzyme-containing feed. The enzyme-containing feed is concentrated using a filtration unit while the liquefication enzyme is maintained in an active state until a pressure change across the filtration unit begins to decrease. A permeate and a retentate are thereby produced.

In a specific embodiment relating to the processing of sweet potatoes, the sweet potatoes are washed and reduced in size. Water is added to the sweet potatoes to form an aqueous sweet potato mixture which is enzymatically treated to produce a sweet potato feed. The sweet potato feed is filtered to obtain a permeate and a retentate.

### Brief Description Of Drawings

The figures below depict various aspects and features of the present invention in accordance with the teachings herein.

Figure 1 is a flow chart that illustrates one embodiment of a process according to the present invention.

Figure 2 is a flow chart that illustrates another embodiment of a process according to the present invention.

Figure 3 is a schematic illustration of a preferred system for carrying out a filtration step according to the present invention.

Figure 4 shows the pressure change of the retentate across the filtration unit (ΔP*_{RET}*) versus retentate concentration (VRF₀, volume reduction factor with respect to the original volume of the plant) achieved using a process according to the present invention as applied to sweet potato (Δ), kale (◇), and tomato (o).

### Best Modes for Carrying Out the Invention

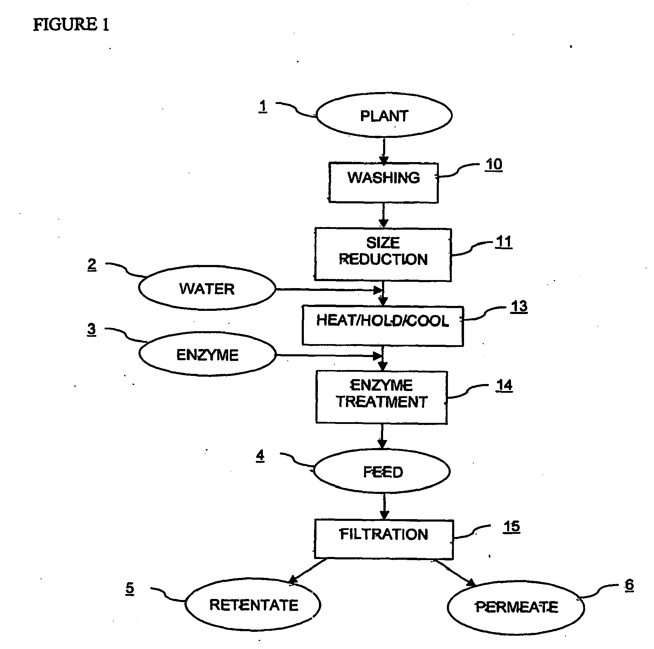

Referring now to Figure 1, there is shown one embodiment of a process according to the present invention. Although presented as a flowchart, Figure 1 is not intended to imply that the recited steps must be performed in the order shown, nor is it intended to imply that the present invention requires each of the steps shown.

In step 10, a plant (1) is washed in water to remove dirt As used herein, "plant" includes fruits, vegetables, or other plant parts, such as leaves, stems, roots, tubers, etc. The skins or outer layers of the plant may be removed if desired, either prior to washing or in a subsequent step, such as an extraction step (not shown).

The plant is typically reduced in size, as shown in step 11. Any conventional size reduction means may be used, such as a hammer mill, dicer, disintegrator, or other mechanism known in the art. Size reduction aids in the release of fluids from the cells of the plant and also allows for more even processing of the plant in subsequent steps.

Water (2) may be added to the plant to form an aqueous plant mixture. The addition of water may aid in the subsequent pre-filtration processing of the plant. Typically, about 0 to about 20 parts water in total is added to about 10 parts plant during the pre-filtration processing according to the present invention. The total amount of water may be added all at once or, as illustrated below, added in parts at different steps of the pre-filtration processing.

An acid may be added with the water to prevent oxidation of the plant, and may also serve to optimize the subsequent enzyme treatment. If an acid is used, any acid or combination of acids that may be consumed by animals and/or humans may be used, and preferably, the acid(s) will not adversely affect the taste of the resulting products. Currently preferred acids include phosphoric acid and citric acid. A reducing agent also may be added with the water to reverse any oxidation and browning that may occur. Any reducing agent or combination of reducing agents that may be consumed by animals and/or humans may be used, and the reducing agent(s) preferably will not adversely affect the taste of the resulting juice. A currently preferred reducing agent is vitamin C.

As shown in Figure 1, the aqueous plant mixture is subjected to a heat/hold treatment in step 13 to form a plant mash. The plant is heated (typically, with stirring) to soften the plant tissue, which aids the processing of the plant in subsequent steps. The temperature to which the plant is heated and held will vary depending on the plant, though it has been observed that heating to a temperature of at least about 71°C (160°F), preferably in a range of about 71°C (160°F) to about 93°C (200°F), for between about 5 and about 60 minutes is sufficient to soften the tissue of a variety of plants. Depending on the plant being processed, the heat/hold treatment may also cook starch present in the plant (which further aids in subsequent processing of the plant) and/or kill undesirable enzymes, such as polyphenyloxidase which contributes to oxidative browning of the plant. In some embodiments, it may be desirable to adjust the temperature of the plant, *e.g.*, by cooling, before proceeding to the next step, as shown in step 13.

A liquefication enzyme (3) is added, and the enzyme-containing plant mash held at a temperature, a pH, and a solids level (substrate concentration) at which the liquefication enzyme is active for a sufficient amount of time for the enzyme to act (typically, with stirring or some shearing action) in an enzyme treatment step, as shown in step 14. A liquefication enzyme includes any enzyme that liquefies plant material (*e.g.*, pectins, cellulose, *etc.*), and so includes pectinases, cellulases, hemicellulases, pullulanases, amylases, cellubiases, and combinations thereof, as well as other liquefication enzymes known in the art. The particular enzyme or combination of enzymes used depends on the particular plant and plant material(s) targeted.

Each enzyme has optimal temperature, pH, and solids level ranges for its activity, and such information is known or readily available from commercial enzyme providers. When a combination of enzymes is used, generally a temperature, a pH, and a-solids level are chosen that optimize the activity of the combination as a whole, rather than of a particular enzyme within the combination. In one embodiment, the temperature, pH, and/or solids level of the plant mash are adjusted to optimal levels, *e.g.*, by the addition of water and/or other means known in the art, prior to the addition of the liquefication enzyme. Other process conditions (*e.g.*, amount of enzyme added, time, atmosphere, *etc.*) and co-factors (*e*.*g*., calcium levels, inhibition factors, *etc.*) may be varied to optimize enzyme activity.

The enzyme treatment step results in an enzyme-containing feed (4) which is then pumped to a filtration unit where it is concentrated, as shown in step 15. Filtration removes water-insoluble plant components (*e.g.*, carotenoids, other water-insoluble nutrients), which remain in the retentate (5), from the juice-containing permeate (6).

During the filtration step, it may be advantageous to add water to the feed in a diafiltration process. The water may be added at the beginning or end of a concentration run (batch diafiltration), or continuously throughout the concentration run (continuous diafiltration; also known as pulp washing). Diafiltration allows for more of the water-soluble components (*e.g.*, sugars, vitamins, *etc*.) to be included in the permeate, resulting in higher juice yield per volume of plant. But diafiltration also results in higher volumes of material being run through the filtration unit and so higher processing costs. Whether applying diafiltration is advantageous to a process according to the present invention will depend on the particular economics of each application and can be determined by those of ordinary-skill in the art.

It has been surprisingly observed that, if the liquefication enzyme is still active during the filtration step, the enzyme-containing plant feed can be continuously concentrated for much longer periods of time and to greater levels than previously observed, resulting in greater permeate and thus greater juice yields, as well as lower retentate volumes and higher nutrient concentrations.

Without being bound by any particular theory, it is believed that these unexpected benefits result from the combination of active liquefication enzyme in the plant feed and the continuous removal of water and water-soluble components from the plant feed. Some of these water-soluble components are believed to provide alternative binding sites for the active enzyme. Removing these components from the plant feed eliminates a competing pathway for the enzyme's activity. At the same time, removing water increases the concentration of active enzyme in the feed. In effect, it is believed that the-combination of these factors increases the concentration of enzyme available for binding to the active plant substrate, driving the enzymatic liquefication of plant material further than prior art enzymatic treatments have been able to achieve. As enzymatic liquefication of plant material (*e*.*g*., pectins, celluloses, *etc*.) continues during filtration, more of the water-insoluble, high molecular weight plant material is broken down into lower molecular weight components, which then can pass through the filtration membrane and so be removed from plant-feed and ultimately from the retentate.

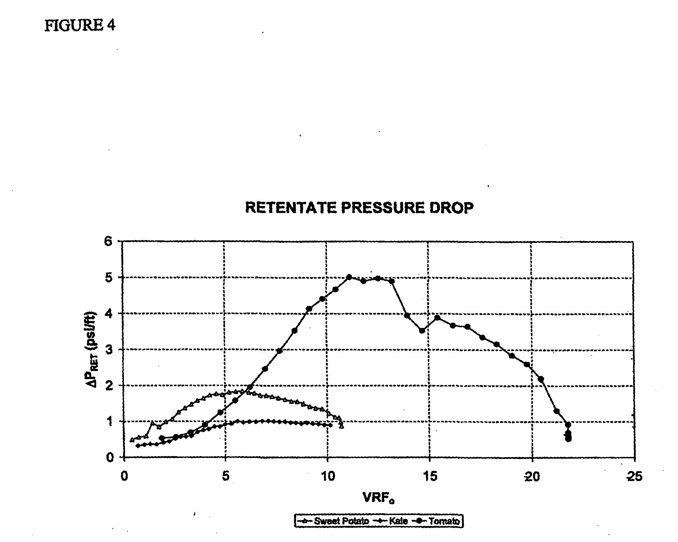

This surprising synergistic result is evidenced by the data shown in Figure 4. Figure 4 plots the pressure change of the retentate across the filtration unit (ΔP*_{RET}*) against the volume reduction factor with respect to the original volume of the plant (VRF₀), which is a measure of how much the retentate is concentrated with respect to the original volume of the plant Typically, one of skill in the art would expect the retentate pressure change to continuously increase as the retentate becomes more concentrated (*i*.e., as VRF₀ values increase). Surprisingly, however, when the activity of the liquefication enzyme is maintained in accordance with a process of the present invention, at some concentration level, the retentate pressure change begins to decrease. This surprising result was observed with a variety of plants, including sweet potato (Δ), kale (◇), and tomato (o).

The activity of liquefication enzyme in the enzyme-containing feed is typically maintained during the filtration step by maintaining the feed at a temperature and pH level at which the liquefication enzyme is active. As discussed above, each enzyme or combination of enzymes has temperature and pH ranges in which its activity is optimal. In one embodiment, the temperature and pH of the enzyme-containing feed is maintained within the optimal ranges from the enzyme treatment step to and during the filtration step. In cases where the liquefication enzyme is deactivated prior to the filtration step, active liquefication enzyme may be added to the plant feed, and the enzyme-containing feed is maintained within the optimal temperature and pH ranges for the active liquefication enzyme during the filtration step.

The data shown in Figure 4 for each of sweet potato (Δ), kale (◇), and tomato (o) were obtained using the following conditions: treating the plant with a mixture of pectinase, cellulase, and hemicellulase, and maintaining at a temperature in a range of about 54°C (130°F) to about 66°C (150°F) and a pH of less than about 6.

This surprising synergy results in a retentate that has a smoother, less viscous, more fluid consistency compared to the pulpy, paste-like consistency of plant retentates obtainable from previous filtration methods. The resulting retentate also has a lower volume and a higher nutrient concentration than previously obtained retentates. The use of active liquefication enzyme during filtration in according with a process of the present invention has, in some embodiments, produced nutrient-enriched retentates having at least 700% greater nutrient concentration (*i.e.,* a concentration factor of at least 7), more preferably at least 1000% (*i*.*e*., a concentration factor of at least 10), on a solids (dry) basis compared to the original plant.

Compared to other prior art methods of extracting hydrophillic nutrients from a plant, such as solvent extraction and super-critical fluid extraction, the use of active liquefication enzyme during filtration in accordance with a process of the present invention provides a more cost-effective and more environmentally friendly way of obtaining a nutrient-enriched plant product. For example, the process according to the present invention does not require the use of an organic solvent, such as solvent extraction methods do, and so produces a nutrient-enriched product that is suitable for animal and/or human consumption without the need for a costly solvent removal step. The present invention also-eliminates the need to use a super-critical fluid, such as super-critical CO₂, which requires-expensive-equipment to control. Moreover, the nutrient-enriched retentate according to the present invention appears to be more stable to environmental factors, such as temperature, oxygen, light, *etc.*, than the nutrient extracts obtainable from solvent extraction and super-critical fluid extraction.

The retentate obtainable from this process thus has a nutrient content, stability, texture, and consistency that makes it more desirable and more readily usable as a-component of a manufactured food product, such as a soup, sauce, *etc.*, than previously obtained plant retentates and nutrient extracts. It may be advantageous to dry the retentate of the present invention, *e.g.*, to inhibit microbial activity. Drying of the retentate may be accomplished using methods known in the art, such as evaporation, oven-drying, freeze-drying, spray-drying, *etc.*

The permeate obtainable from a process of the present invention contains the plant juice and is typically clear, meaning it has little or no turbidity. Excess water may be removed from the permeate for better storage and stability of the juice. Various water-removal methods are known in the art (*e.g.*, reverse osmosis, evaporation, spray-drying, *etc*.) and may be used in the present invention. The resulting plant juice concentrate may be used in concentrated form, or it may be reconstituted at a later time with the addition of water. The plant juice may be used, *e.g.*, as a component of a food product, such as a beverage, soup, sauce, *etc.*

It has been observed that, in some instances, juice that has been reconstituted from the concentrate has a turbidity that was not present when the permeate or concentrate was initially obtained. This typically has been seen after the concentrate has been stored for a period of time. The turbidity appears to be due to the formation of water-insoluble components that precipitate out of the juice. It has also been observed that applying heat to either the enzyme-containing feed or to the permeate (either before or after concentration), followed by a separation step, prevents this turbidity from forming.

Without being bound to any particular theory, it is believed that the application of heat forces the water-insoluble components that cause this turbidity to precipitate out so that they can be removed prior to storage of the concentrate. In cases where the enzyme-containing feed is heated, the filtration step which separates the juice-containing permeate from the retentate simultaneously excludes this water-insoluble precipitate. Where the permeate is heated, this water-insoluble precipitate is observed to form, and an additional separation step (*e.g.*, centrifuging or filtering) is used to remove this precipitate from the juice. Heating the enzyme-containing feed or the permeate to a temperature of at least about 71°C (160°F), preferably to a temperature in a range of about 82°C (180°F) to about 93°C (200°F), for a few minutes has been shown to be effective in preventing turbidity in the reconstituted plant juice.

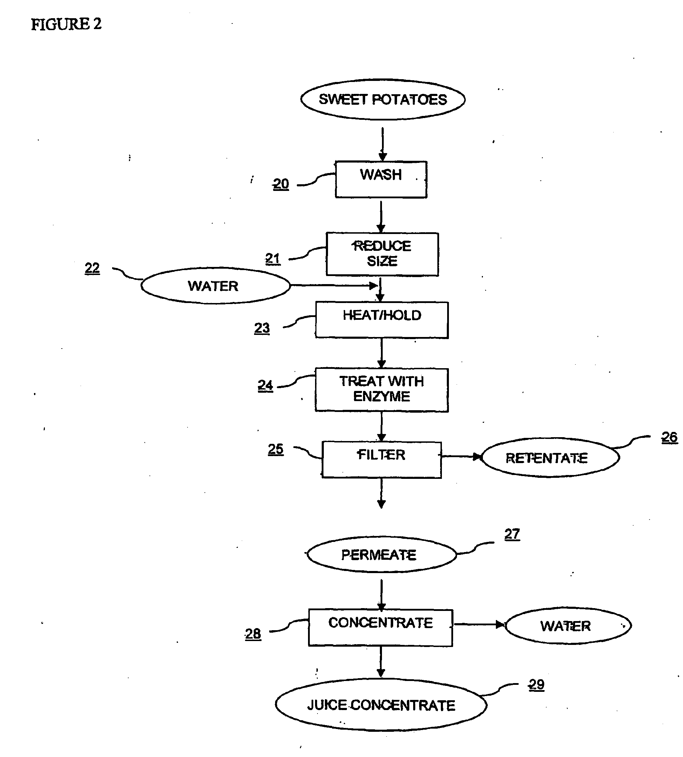

Turning now to Figure 2, there is shown another embodiment of the present invention that relates particularly to the production of a juice from sweet potatoes. Although presented as a flowchart, Figure 2 is not intended to imply that the recited steps must be performed in the order shown, nor is it intended to imply that the present invention requires each of the steps shown.

In step 20, the sweet potatoes are washed in water, typically with a mechanical scrubber, to remove soil and dirt from their surfaces. The sweet potatoes are reduced in size in step 21 using any conventional size reduction means, such as a hammer mill.

Water (22) is added to the sweet potatoes to form an aqueous sweet potato mixture. Typically, about 5 to about 20 parts water in total is added to about 10 parts sweet potato during the pre-filtration processing according to the present invention, with the currently preferred amount of water being about 15 parts by weight total to about 10 parts sweet potato. The total amount of water may be added all at once or, as illustrated below, added in parts at different steps of the pre-filtration processing. Preferably, an acid is added with the water to prevent oxidation and browning of the sweet potato, and may also serve to optimize the subsequent enzyme treatment. Currently preferred acids include phosphoric acid and citric acid. More preferably, a reducing agent is also added with the water to reverse any oxidation and browning of the sweet potatoes that may occur. A currently preferred reducing agent is vitamin C.

The aqueous sweet potato mixture is advantageously subjected to a heat/hold treatment in step 23. The aqueous sweet potato mixture is heated (typically, with stirring) to help soften the sweet potatoes and cook the starch in the sweet potatoes, both of which aid the processing of the sweet potatoes in subsequent steps. Typically, the aqueous sweet potato is heated to a temperature of at least about 71°C (160°F), the temperature at which the sweet potato starch begins to cook. Preferably, the aqueous sweet potato mixture is heated to a temperature in a range of about 71°C (160°F) to about 93°C (200°F) and held for a sufficient amount of time to soften the sweet potatoes and cook at least part of the starch. Currently, it is preferred to heat the aqueous sweet potato mixture to a temperature of about 82°C (180°F) and hold for about 15. to about 20 minutes.

The sweet potatoes are subjected to an enzyme treatment in step 24. The enzyme treatment may involve endogenous enzymes or exogenous enzymes or both, and may involve combinations of exogenous enzymes.

In one embodiment, the enzyme treatment includes the heat/hold step 23 described previously. Heating the aqueous sweet potato mixture may activate endogenous beta-amylase that convert starch into sugar, specifically into maltose, within the sweet potato.

In another embodiment, an exogenous enzyme is added to the sweet potatoes, and the enzyme-containing sweet potato mixture is held at a temperature and pH at which the exogenous enzyme is active for a sufficient amount of time for the enzyme to act (typically, with stirring or some shearing action). The temperature, pH, and solids level of the sweet potato mixture may be adjusted to optimal levels prior to the enzyme treatment step. Other process conditions (*e.g.*, amount of exogenous enzyme added, time, atmosphere, *etc.*) and co-factors (*e.g.*, calcium levels, inhibition factors, *etc.*) may be varied to optimize enzyme activity.

In a particularly preferred embodiment, the exogenous enzyme includes a combination of a liquefication enzyme and a sugar converting enzyme. A liquefication enzyme includes those described previously. A sugar converting enzyme includes any enzyme that converts starch to sugar or one sugar into a different sugar (*e.g.*, maltose to glucose), and so includes alpha-amylase, gluco-amylase, beta-amylase, pullulanase, and combinations thereof as well as others known in the art. The particular combination of enzymes used depends on the particular plant materials targeted and/or the particular combination of sugars desired in the final juice product (*e*.*g.*, for taste or nutrition reasons).

A currently preferred combination of exogenous enzymes for use with sweet potatoes includes pectinase, cellulase, hemicellulase, and gluco-amylase. When this combination of enzymes is used, the enzyme-containing sweet potato mixture contains about 15 parts added water to about 10 carts sweet potato (by weight) and is held at a temperature in a range of about 54°C (130°F) to about 66°C (150°F), preferably about 60°C (140°F), and a pH less than about 6, preferably in a range of about 4 to about 5, for about 90 minutes.

In embodiments where the sweet potatoes are heated and an exogenous enzyme is to be added, it may be desirable to cool the sweet potatoes before the exogenous enzyme is added. Preferably, the sweet potatoes are adjusted to a temperature at which the exogenous enzyme is active. This may be accomplished through the addition of cold water to the heated sweet potatoes (with the total water added being within the parameters described with regards to the water 22, described above) or by other means known in the art.

The enzymatically treated sweet potatoes are filtered in step 25. Filtration separates a retentate (26) and a permeate (27). The sweet potato retentate is nutrient rich, particularly in beta-carotene content, and is richly colored, and may be used as a nutritional supplement and/or coloring additive to a food product, such as a soup, sauce, *etc.*

The sweet potato permeate (27) contains the sweet potato juice. Excess water may be removed from the permeate in a concentration step 28 to form a sweet potato juice concentrate (29). The juice concentrate has better stability and may be stored more easily than the juice-containing permeate. The sweet potato juice concentrate may be used in concentrated form, or it may be reconstituted at a later time with the addition ofwater. The sweet potato juice may be used, *e.g.*, as a flavoring and/or sweetening-component of a food product, such as a beverage, soup, sauce, etc.

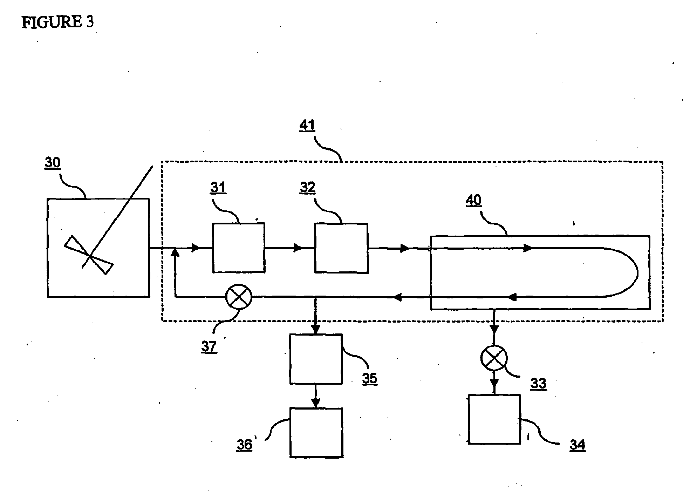

Figure 3 illustrates a presently preferred system for practicing a filtration step according to the present invention. The system is equipped with hardware and software (some, but not all, of which is shown) that monitor and control various parameters of the filtration process, such as inlet pressure, exit pressure, temperature, flow rate, *etc*. The enzyme-containing feed material is stored in a feed tank 30 that is equipped with a stirrer or agitator. The feed material is pumped from the feed tank 30 by a recirculation pump 31 through a flow meter 32 into the filtration unit 40. The juice-containing permeate may be removed through a back pressure valve 33 and collected in a permeate tank 34. The retentate may be removed by a metering pump 35 and collected in a retentate tank 36, but is preferably conducted through a back pressure valve 37 and back into the filtration unit 40.

In other words, the system shown in Figure 3 includes a filtration loop 41 through which the retentate is preferably circulated repeatedly and so continually concentrated, as discussed above. When the system is to be used in this manner, the metering pump 35 is preferably used only once the desired concentration level is reached in order to maintain the retentate at that desired concentration level, which allows the filtration to proceed in a steady-state mode.

The inlet and exit pressures are preferably set to maintain a constant recirculation rate (velocity) and transmembrane pressure in the filtration unit. The inlet pressure typically falls in or below a range of about 2.1 to about 5.5 x 10⁵ Pa (about 30 to about 80 psi) and the exit pressure typically falls in or below a range of about 1.0 to about 4.1 x 10⁵ Pa (about 15 to about 60 psi). Those of ordinary skill in the art will be able to adjust these pressures depending on the viscosity of the feed and the desired recirculation rate.

The filtration unit typically incorporates at least one filtration membrane that has a nominal pore size of less than about 0.5 µm, preferably less than or equal to about 0.1 µm, and an initial water permeability (P), defined as permeate flux (litres/m²/day) divided by transmembrane pressure (Pa) of at least 0.059 (permeate flux (gallons/ft²/day) divided by transmembrane pressure (pounds per square inch, psi), of at least 10).

The present invention is not limited in terms of the types of filters or filtration systems that may be used. It is preferred, especially for industrial scale applications of the present invention, to use a cross-flow filtration membrane. A cross-flow filtration membrane, in which the feed flows parallel to the filtration membrane surface, is particularly well-suited for continuous filtration and higher throughputs. A particularly preferred type of cross-flow filtration membrane is a porous, stainless steel tubular membrane having a sintered titanium dioxide coating, such as the Scepter^{®} filtration module manufactured by Graver Technologies.

The presently preferred filtration unit incorporates three stages of porous, stainless steel cross-flow filtration modules having a nominal pore size of 0.1 µm and 1.9 cm (¾") diameter. Presently, the first two stages are 6.1 m (20') in length and the third stage somewhat shorter, although the specifications of the filtration unit (e.g., number of filtration stages, diameter and length of the filtration modules, etc.) are not critical to the practice of the present invention and may be varied as desired or needed.

In the manner described above, the present invention thus provides a process for enzymatically treating a plant to produce a plant juice and nutrient-enriched retentate. While this invention has been described with reference to specific embodiments, these are illustrative only and not limiting, having been presented by way of example. Other modifications, including the omission of certain steps and the adaptation and optimization of certain processing parameters, will become apparent to those skilled in the art by study of the specification and drawings. It is thus intended that the following appended claims include such modifications as fall within the spirit and scope of the present invention.

## Claims

1. A process for enzymatically treating a plant comprising washing the plant and treating the plant with a liquefication enzyme to form an enzyme-containing feed; **characterized by** maintaining the liquefication enzyme in an active state in the enzyme-containing feed while concentrating the enzyme-containing feed using a filtration unit until a pressure change across the filtration unit begins to decrease and producing a permeate and a retentate thereby.

2. The process of claim 1, **characterized in that**
a) the liquefication enzyme is selected from the group consisting of a pectinase, a cellulase, a hemicellulase, pullulanase, amylase, cellubiase, and combinations thereof, or
b) treating the plant with the liquefication enzyme comprises adjusting and/or maintaining the temperature and pH of the plant within temperature and pH ranges where the liquefication enzyme is active and combining the plant with the liquefication enzyme, especially wherein maintaining the liquefication enzyme in an active state in the enzyme-containing feed comprises maintaining the enzyme-containing feed within temperature and pH ranges where the liquefication enzyme is active, most especially wherein the enzyme-containing feed is maintained within the temperature and pH ranges where the liquefication enzyme is active from treating the plant to concentrating the enzyme-containing feed.

3. The process of claim 1, **characterised in that**
a) the filtration unit comprises at least one crossflow filtration stage, or
b) the filtration unit comprises at least one filtration membrane having a nominal pore size of less that about 0.5 µm, or
c) the filtration unit comprises a filtration loop and concentrating the enzyme-containing feed comprising recirculating the feed through the filtration loop.

4. The process of claim 1, **characterised by** further comprising heating the permeate to a temperature of at least about 71°C (160°F), thereby causing a water-insoluble precipitate to form; and separating the precipitate from the permeate, especially wherein separating the precipitate comprises centrifuging the precipitate from the permeate, or filtering the precipitate from the permeate.

5. The process of claim 1, **characterized in that** the plant is sweet potato and the step of treating the plant with a liquefication enzyme comprises reducing the sweet potato in size; adding water to the sweet potato to form an aqueous sweet potato mixture; and enzymatically treating the aqueous sweet potato mixture to form a sweet potato feed.

6. The process of claim 5, **characterized in that** the enzyme is an endogenous enzyme and enzymatically treating the aqueous sweet potato mixture comprises heating the aqueous sweet potato mixture to at least about 71°C (160°F), and holding the aqueous sweet potato mixture at at least about 71°C (160°F) to activate the endogenous enzyme.

7. The process of claim 5, **characterized in that** the enzyme is an exogenous enzyme and enzymatically treating the aqueous sweet potato mixture comprises adjusting and/or maintaining the temperature and pH of the aqueous sweet potato mixture within temperature and pH ranges where the exogenous enzyme is active; adding the exogenous enzyme to the aqueous sweet potato mixture; and holding the enzyme-containing sweet potato mixture within the temperature and pH ranges where the exogenous enzyme is active, especially wherein the liquefication enzyme is selected from the group consisting of a pectinase, a cellulase, a hemicellulase, and combinations thereof.

8. The process of claim 5, **characterized in that** enzymatically treating the aqueous sweet potato mixture further comprises treating the aqueous sweet potato mixture with a sugar-converting enzyme, especially wherein the sugar-converting enzyme is selected from the group consisting of a gluco-amylase, an alpha-amylase, a beta-amylase, and combinations thereof.

9. The process of claim 7, wherein the temperature is in a range of about 54°C (130°F) to about 66°C (150°F), or wherein the pH is less than about 6.

10. The process of claim 5, **characterized by** further comprising adding a consumable acid to the sweet potato with the water to form the aqueous sweet potato mixture, especially wherein the consumable acid is selected from the group consisting of phosphoric acid and citric acid.

11. The process of claim 5, **characterized by** further comprising adding a consumable reducing agent, to the sweet potatoes with the water to form the aqueous sweet potato mixture, especially wherein the consumable reducing agent is vitamin C.

12. The process of claim 5 **characterized by** further comprising heating the permeate to a temperature in a range of about 71°C(160°F) to about 93°C (200°F), thereby causing a water-insoluble precipitate to form; and separating the water-insoluble precipitate from the permeate, or prior to filtering, heating the sweet potato feed to a temperature in a range of about 71°C (160°F) to about 93°C (200°F).

13. The process of claim 5, **characterized in that** filtering the sweet potato feed comprises recirculating the sweet potato feed through a filtration loop, especially wherein the filtration loop comprises at least one crossflow filtration stage, or at least one filtration membrane having a nominal pore size of less than about 0.5 µm.

## Patentansprüche

1. Verfahren zur enzymatischen Behandlung einer Pflanze mit den Schritten: Waschen der Pflanze und Behandeln der Pflanze mit einem Verflüssigungsenzym, um eine enzymhaltige Nahrung zu erzeugen, **dadurch gekennzeichnet, dass** das Verflüssigungsenzym in der enzymhaltigen Nahrung in aktivem Zustand gehalten wird, während die enzymhaltige Nahrung mit Hilfe einer Filtrationseinheit aufkonzentriert wird bis eine Druckänderung über die Filtrationseinheit anfängt abzunehmen und dadurch ein Permeat und ein Retentat erzeugt werden.

2. Verfahren nach Anspruch 1, **dadurch gekennzeichnet, dass**
a) das Verflüssigungsenzym ausgewählt ist aus der Gruppe Pektinase, eine Cellulase, eine Hemicellulase, Pullulanase, Amylase, Cellubiase und Kombinationen derselben, oder
b) die Behandlung der Pflanze mit dem Verflüssigungsenzym die Einstellung und/oder das Halten der Temperatur und des pH-Werts der Pflanze innerhalb von Temperatur- und pH-Bereichen umfasst, wo das Verflüssigungsenzym aktiv ist nd die Pflanze dann mit dem Verflüssigungsenzym vereinigt wird, wobei insbesondere das Beibehalten des Verflüssigungsenzyms in der enzymhaltigen Nahrung in aktivem Zustand das Halten der enzymhaltigen Nahrung in einem Temperatur- und pH-Bereich umfasst, wo das Verflüssigungsenzym aktiv ist, wobei ganz besonders die enzymhaltige Nahrung in den Temperatur- und pH-Bereichen gehalten wird, wo das Verflüssigungsenzym von der Behandlung der Pflanze an bis zum Aufkonzentrieren der enzymhaltigen Nahrung aktiv ist.

3. Verfahren nach Anspruch 1, **dadurch gekennzeichnet, dass**
a) die Filtrationseinheit mindestens eine Querstromfiltrationsstufe umfasst oder
b) die Filtrationseinheit mindestens eine Filtrationsmembran mit einer nominalen Porengröße von weniger als etwa 0,5 µm umfasst oder
c) die Filtrationseinheit eine Filtrationsschleife umfasst und das Aufkonzentrieren der enzymhaltigen Nahrung das Umwälzen der Nahrung durch die Filtrationsschleife umfasst.

4. Verfahren nach Anspruch 1, **dadurch gekennzeichnet, dass** es ferner das Erhitzen des Permeats auf eine Temperatur von etwa 71°C (160°F) umfasst, wodurch veranlasst wird, dass sich ein wasserunlöslicher Niederschlag bildet, und dass der Niederschlag vom Permeat abgetrennt wird, wobei besonders das Abtrennen das Abzentrifugieren des Niederschlags vom Permeat oder das Abfiltern des Niederschlags vom Permeat umfasst.

5. Verfahren nach Anspruch 1, **dadurch gekennzeichnet, dass** die Pflanze eine Süßkartoffel ist und der Schritt der Behandlung der Pflanze mit einem Verflüssigungsenzym die Verringerung der Größe der Süßkartoffel, den Zusatz von Wasser zur Süßkartoffel zur Bildung einer wässrigen Süßkartoffelmischung und die enzymatische Behandlung der wässrigen Süßkartoffelmischung zur Bildung einer SüßkartoffelNahrung umfasst.

6. Verfahren nach Anspruch 5, **dadurch gekennzeichnet, dass** das Enzym ein endogenes Enzym ist und die enzymatische Behandlung der wässrigen Süßkartoffelmischung das Erhitzen der wässrigen Süßkartoffelmischung auf mindestens etwa 71 °C (160°F) und das Halten der wässrigen Süßkartoffelmischung bei mindestens etwa 71°C (160°F) umfasst, um das endogene Enzym zu aktivieren.

7. Verfahren nach Anspruch 5, **dadurch gekennzeichnet, dass** das Enzym ein exogenes Enzym ist und dass die enzymatische Behandlung der wässrigen Süßkartoffelmischung folgendes umfasst: das Einstellen und/oder Halten der Temperatur und des pH-Werts der wässrigen Süßkartoffelmischung innerhalb von Temperatur- und pH-Bereichen, wo das exogene Enzym aktiv ist, die Zugabe des exogenen Enzyms zu der wässrigen Süßkartoffelmischung sowie das Halten der enzymhaltigen Süßkartoffelmischung innerhalb von Temperatur- und pH-Bereichen, wo das exogene Enzym aktiv ist, wobei insbesondere das Verflüssigungsenzym ausgewählt wird aus der Gruppe Pektinase, einer Cellulase, einer Hemicellulase und Kombinationen derselben.

8. Verfahren nach Anspruch 5, **dadurch gekennzeichnet, dass** die enzymatische Behandlung der wässrigen Süßkartoffelmischung ferner die Behandlung der wässrigen Süßkartoffelmischung mit einem Zucker-konvertierenden Enzym umfasst, wobei das Zucker-konvertierende Enzym insbesondere ausgewählt wird aus der Gruppe Glucoamylase, einer Alpha-Amylase, einer Beta-Amylase und Kombinationen derselben.

9. Verfahren nach Anspruch 7, in welchem die Temperatur im Bereich von etwa 54°C (130°F) bis etwa 68°C (150°F) liegt oder in welchem der pH-Wert niedriger als etwa 6 ist.

10. Verfahren nach Anspruch 5, **dadurch gekennzeichnet, dass** es ferner die mit dem Wasser erfolgende Zugabe einer verzehrbaren Säure zu der Süßkartoffel umfasst, um die wässrige Süßkartoffelmischung zu erhalten, wobei die verzehrbare Säure insbesondere ausgewählt wird aus der Gruppe Phosphorsäure und Citronensäure.

11. Verfahren nach Anspruch 5, **dadurch gekennzeichnet, dass** es ferner die mit dem Wasser erfolgende Zugabe eines verzehrbaren Reduktionsmittels zu der Süßkartoffel umfasst, wobei das verzehrbare Reduktionsmittel insbesondere Vitamin C ist.

12. Verfahren nach Anspruch 5, **dadurch gekennzeichnet, dass** es ferner das Erhitzen des Permeats auf eine Temperatur im Bereich von etwa 71°C (160°F) bis etwa 93°C (200°F), was die Bildung eines wasserunlöslichen Niederschlags veranlasst, sowie die Abtrennung des wasserunlöslichen Niederschlags von dem Permeat umfasst, oder dass es das vor dem Filtrieren erfolgende Erhitzen der Süßkartoffelnahrung auf eine Temperatur im Bereich von etwa 71°C (160°F) bis etwa 93°C (200°F) umfasst.

13. Verfahren nach Anspruch 5, **dadurch gekennzeichnet, dass** das Abfiltrieren der Süßkartoffelnahrung das Umwälzen der Süßkartoffelnahrung durch eine Filtrationsschleife umfasst, wobei die Filtrationsschleife insbesondere mindestens eine Querstrom-filtrationsstufe oder mindestens eine Filtrationsmembran mit einer nominalen Porengröße von weniger als etwa 0,5 µm umfasst.

## Revendications

1. Procédé pour traiter enzymatiquement un plant comportant le lavage de plant et le traitement du plant à l'aide d'une enzyme de liquéfication pour former une nourriture contenant une enzyme, **caractérisé en ce que** par le maintien de l'enzyme de liquéfication dans un état actif dans la nourriture contenant une enzyme tout en concentrant la nourriture contenant une enzyme en utilisant une unité de filtration jusqu'à ce qu'un changement de pression à travers l'unité de filtration commence à diminuer et la production d'un perméat et d'un rétentat de celui-ci.

2. Procédé selon la revendication 1, **caractérisé en ce que**
a) l'enzyme de liquéfication est choisie parmi le groupe constitué d'un pectinase, une cellulase, une hémicellulase, une pullulanase, une amylase, une cellubiase, et des combinaisons de celles-ci, ou
b) le traitement du plant à l'aide de l'enzyme de liquéfication comporte l'ajustement et/ou le maintien de la température et du pH du plant dans des plages de température et de pH où l'enzyme de liquéfication est active et la combinaison du plant avec l'enzyme de liquéfication, en particulier dans lequel le maintien de l'enzyme de liquéfication dans un état actif dans la nourriture contenant une enzyme comporte le maintien de la nourriture contenant une enzyme dans des plages de température et de pH où l'enzyme de liquéfication est active, de manière la plus particulière dans lequel la nourriture contenant une enzyme est maintenue dans les plages de température et de pH où l'enzyme de liquéfication est active, action allant du traitement du plant à la concentration de la nourriture contenant une enzyme.

3. Procédé selon la revendication 1, **caractérisé en ce que**
a) l'unité de filtration comporte au moins un étage de filtration à écoulements croisés, ou
b) l'unité de filtration comporte au moins une membrane de filtration ayant une taille de pore nominale inférieure à environ 0,5 µm, ou
c) l'unité de filtration comporte une boucle de filtration et la concentration de la nourriture contenant une enzyme comporte la remise en circulation de la nourriture à travers la boucle de filtration.

4. Procédé selon la revendication 1, **caractérisé en ce qu'**il comporte de plus le chauffage du perméat à une température d'au moins environ 71 °C (160 °F), en provoquant ainsi la formation d'un précipité insoluble dans l'eau, et la séparation du précipité à partir du perméat, en particulier dans lequel la séparation du précipité comporte la centrifugation du précipité à partir du perméat, ou la filtration du précipité à partir du perméat.

5. Procédé selon la revendication 1, **caractérisé en ce que** le plant est une patate et l'étape de traitement du plant à l'aide d'une enzyme de liquéfication comporte la réduction de la patate en taille, l'ajout d'eau à la patate pour former un mélange de patate aqueux, et le traitement enzymatique du mélange de patate aqueux pour former une nourriture à base de patate.

6. Procédé selon la revendication 5, **caractérisé en ce que** l'enzyme est une enzyme endogène et le traitement enzymatique du mélange de patate aqueux comporte le chauffage du mélange de patate aqueux jusqu'à au moins environ 71 °C (160 °F), et le maintien du mélange de patate aqueux à au moins environ 71 °C (160 °F) pour activer l'enzyme endogène.

7. Procédé selon la revendication 5, **caractérisé en ce que** l'enzyme est une enzyme exogène et le traitement enzymatique du mélange de patate aqueux comporte l'ajustement et/ou le maintien de la température et du pH du mélange de patate aqueux dans des plages de température et de pH où l'enzyme exogène est active, l'ajout de l'enzyme exogène au mélange de patate aqueux, et le maintien du mélange de patate contenant une enzyme dans les plages de température et de pH où l'enzyme exogène est active, en particulier dans lequel l'enzyme de liquéfication est choisie parmi le groupe constitué d'une pectinase, une cellulase, une hémicellulase, des combinaisons de celles-ci.

8. Procédé selon la revendication 5, **caractérisé en ce que** le traitement enzymatique du mélange de patate aqueux comporte de plus le traitement du mélange de patate aqueux à l'aide d'une enzyme de conversion de sucre, en particulier où l'enzyme de conversion de sucre est choisie parmi le groupe constitué d'une gluco-amylase, d'une alpha-amylase, d'une bêta-amylase, et de combinaisons de celles-ci.

9. Procédé selon la revendication 7, dans lequel la température se trouve dans une plage d'environ 54 °C (130 °F) à environ 66 °C (150 °F), ou dans lequel le pH est inférieur à environ 6.

10. Procédé selon la revendication 5, **caractérisé en ce qu'**il comporte de plus l'ajout d'un acide consommable à la patate avec de l'eau pour former le mélange de patate aqueux, en particulier dans lequel l'acide consommable est choisi parmi le groupe constitué d'acide phosphorique et d'acide citrique.

11. Procédé selon la revendication 5, **caractérisé en ce qu'**il comporte de plus l'ajout d'un agent réducteur consommable, aux patates avec de l'eau pour former le mélange de patate aqueux, en particulier dans lequel l'agent réducteur consommable est la vitamine C.

12. Procédé selon la revendication 5, **caractérisé en ce qu'**il comporte de plus le chauffage du perméat à une température dans une plage d'environ 71 °C (160 °F) à environ 93 °C (200 °F), de manière à provoquer la formation d'un précipité insoluble dans l'eau, et la séparation du précipité insoluble dans l'eau à partir du perméat, ou avant la filtration, le chauffage de la nourriture à base de patate jusqu'à une température dans une plage d'environ 71 °C (160 °F) à environ 93 °C (200 °F).

13. Procédé selon la revendication 5, **caractérisé en ce que** la filtration de la nourriture à base de patate comporte la remise en circulation de la nourriture à base de patate à travers une boucle de filtration, en particulier dans lequel la boucle de filtration comporte au moins un étage de filtration à écoulements croisés, ou au moins une membrane de filtration ayant une taille de pore nominale inférieure à environ 0,5 µm.
